# DEMANDE DE BREVET EUROPEEN

(11) **EP 0 634 380 A2**
(43) Date de publication de la demande: **18.01.1995**
(21) Numéro de dépôt: 94401615.3
(22) Date de dépôt: 12.07.1994
(51) Int. Cl.: C05G 3/00

(54) **Composition liquide pour le traitement des végétaux et procédé de fabrication d'une telle composition**

(30) Priorité: 16.07.1993 FR 9308747
(71) Demandeur: Le Berre, Erwan, F-29710 Plozevet (FR)
(72) Inventeur: Le Berre, Erwan, F-29710 Plozevet (FR)
(74) Mandataire: Ballot, Paul Denis Jacques

(57) **Abrégé**

L'invention a pour objet une composition liquide pour le traitement des végétaux en application foliaire ainsi qu'un procédé de fabrication d'une telle composition liquide.

L'invention se caractérise en ce qu'elle comporte des extraits d'algue marine ainsi que des grains fortement chargés en calcium, dont la dimension moyenne est inférieure à 30 micromètres.

L'invention s'applique au traitement de toutes les plantes comportant des feuilles et avantageusement aux plantes comportant des fruits.

## Description

La présente invention concerne des compositions liquides pour le traitement des végétaux, directement en application foliaire.

La bonne croissance des végétaux dépend de la présence, en quantité suffisante, de nombreux composés minéraux.

Par exemple, le calcium donne une meilleure cohésion et une plus grande résistance aux tissus végétaux. Inversement, une carence en calcium entraîne un ramollissement des fruits, ce qui diminue leur conservation et leur stabilité dans le transport.

De surcroît, ces désordres physiologiques peuvent se compléter par l'apparition de syndromes visibles tels que des tâches brunes sur la peau des pommes ou "bitter pit", ou alors le jaunissement des bords de la laitue.

L'invention a pour objet une composition liquide pour le traitement des végétaux en application foliaire afin de remédier à moindre coût aux désordres physiologiques et aux symptômes mentionnés ci-dessus.

L'invention se caractérise en ce que la composition comporte des extraits d'algue marine, ainsi que des grains fortement chargés en calcium, dont la dimension moyenne est inférieure à 30 micromètres.

Selon une autre caractéristique de l'invention, les grains fortement chargés en calcium sont des grains de Maërl.

L'invention a d'autre part pour objet un procédé de fabrication d'une telle composition liquide.

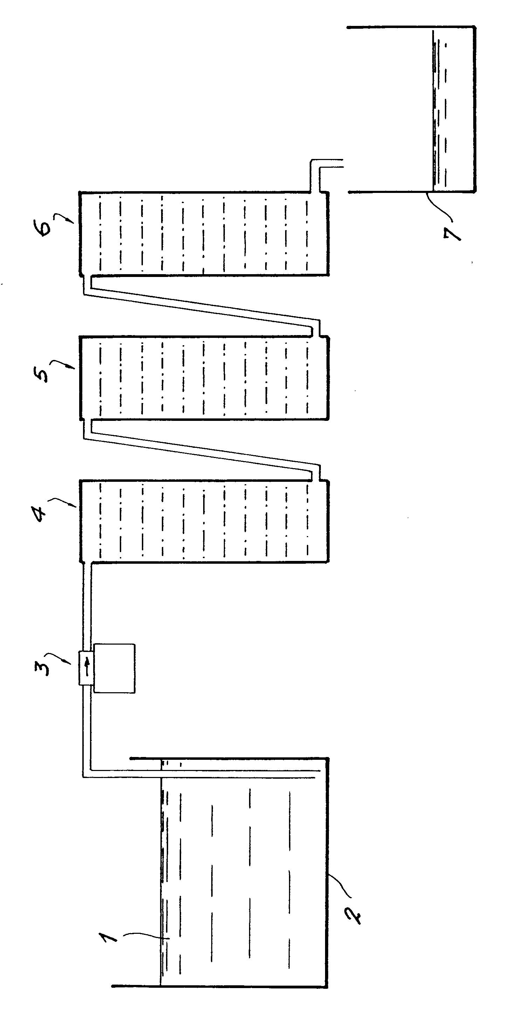

L'invention et ses caractéristiques apparaîtront mieux à la lumière de la description qui va suivre, faite en référence au dessin annexé dans lequel la figure unique est une représentation schématique des moyens de mise en oeuvre du procédé de fabrication énoncé ci-dessus.

La composition liquide de l'invention comporte des extraits d'algue marine et des grains fortement chargés en calcium dont la dimension moyenne est inférieure à 30 micromètres.

Une telle composition peut être obtenue par un procédé en de multiples étapes dans lequel on prépare tout d'abord les extraits d'algue marine, et ensuite les grains fortement chargés en calcium, avant de combiner les deux préparations ainsi obtenues en un mélange à traiter.

La préparation des algues marines préalablement récoltées est avantageusement effectuée dans un bain alcalin.

Par exemple, on peut introduire 100 à 300 kilogrammes d'algues marines telles que des Laminaires dans un bain composé de 500 litres d'eau et d'un kilogramme de potasse.

Les différences de potentiels électrochimiques existant entre le milieu intracellulaire et le bain alcalin sont à l'origine de nombreux flux moléculaires qui tendent à décharger les algues de leurs constituants intracellulaires. En quelques heures, le bain s'est chargé de molécules variées telles que des oligo-éléments, du mannitol ou de l'alginate.

On dit alors que l'on a retiré la colle des algues car la solution obtenue est glaireuse.

La colle est ensuite filtrée afin de la purifier de toutes les impuretés telles que des débris d'algues, ou de coquillages.

Eventuellement, les débris d'algues récupérés par filtration sont séchés puis broyés en de fines particules réintroduites ultérieurement dans la colle. Dans ce cas, le produit de départ est en quelque sorte reconstitué sous une forme semi-liquide.

La colle est alors introduite dans un broyeur à hélices qui dissocie les alginates et liquéfie la glaire.

La préparation des grains fortement chargés en calcium s'effectue parallèlement.

Ceux-ci sont avantageusement obtenus à partir de Maërl. Le Maërl désigne en fait la forme fossilisée d'une algue marine : le Lithothamne ou Lithothamnium Calcarium qui se développe sur les hauts fonds marins et notamment dans l'archipel des îles Glénan et dans la baie de Morlaix. Le Maërl a la propriété de comporter environ 45% de carbonate de calcium et d'être extrêmement poreux. Les pores du Maërl ont un diamètre de l'ordre du dixième de micron et sont eux-mêmes reliés par des canaux dont la dimension est voisine du centième de micron.

Afin d'obtenir des grains de petite dimension fortement chargés en calcium à partir de Maërl, il est possible de le microniser après déshydratation en utilisant le technique dite des jets d'air dans laquelle les grains de Maërl sont mis en suspension dans un courant d'air, puis entrechoqués afin de réduire leur dimension jusqu'à la dimension souhaitée.

Il est néanmoins préférable pour des raisons évidentes de coût, d'opérer par broyage préalable, puis de réaliser une séparation aéraulique, par exemple en utilisant un cyclone pour enfin récupérer des grains d'une dimension moyenne convenable.

La dimension des grains est avantageusement inférieure à 30 micromètres et préférentiellement comprise entre 5 et 25 micromètres.

Les deux préparations obtenues sont ensuite combinées en un mélange référencé 1 dans la figure unique, à l'intérieur d'un bac 2.

La mise en suspension du Maërl dans la solution d'algues marines est avantageusement facilitée par la présence d'un tensio-actif tel que le gel colloïdal E 415.

Une pompe 3 introduit le mélange 1 sous pression dans une série de filtres à cartouches 4, 5, 6 filtrant des particules de plus en plus fines. Par exemple, le filtre 4 peut être un filtre de 40 micromètres, le filtre 5 peut être un filtre de 20 micromètres, et le filtre 6 peut être un filtre de 18 micromètres.

Suite au passage successif dans ces filtres, la composition finale est récupérée dans un bac 7.

Dans le cas où le mélange initial comporte 65% en poids de solution d'algues marines, 34% de Maërl et 1% d'un agent tensio-actif, l'analyse chimique de la composition sèche obtenue révèle la présence de :
- 0,08%: 'azote total
- 27,16%: de carbonate de calcium
- 0,212%: d'anhydride phosphorique total
- 0,188%: d'oxyde de potassium total
- 15,66%: d'oxyde de calcium total
- 1,86%: d'oxyde de magnésium total
- 0,169%: d'oxyde de magnésium soluble dans l'eau
- 66,69 mg/kg: de bore total
- 3,48 mg/kg: de cuivre total
- 0,161%: de fer total
- 60,02 mg/kg: de manganèse total
- 1,38 mg/kg: de molybdène total
- 7,89 mg/kg: de zinc total
- 33,2%: de matières minérales
- 1,53%: de matières organiques
- 20,40%: d'anhydride carbonique

Le pH de la composition est proche de la neutralité et celle-ci contient plus de 60% d'eau.

Avant traitement, cette composition est diluée une dizaine de fois après rajout éventuel d'une autre substance telle qu'un fongicide ou un herbicide.

La composition est alors suffisamment liquide pour que le passage à travers une buse de projection se réalise efficacement directement en application foliaire.

Le traitement des végétaux en application foliaire ne peut être comparé à la fertilisation des sols en vue d'une absorption radiculaire active des produits fertilisants.

L'algine de la composition est suffisamment visqueuse pour que la composition selon l'invention forme, sur l'épiderme des folioles, une mince pellicule continue et légèrement collante à partir de laquelle s'effectuent les transferts de matières et notamment, des grains de Maërl, et des oligo-éléments.

L'absorption de calcium par la plupart des fruits se réalise à partir de l'apparition du fruit, jusqu'à la phase de grossissement de ceux-ci. Il faut donc pulvériser pendant les 4 à 6 semaines après la floraison. C'est dans cette phase de division cellulaire que le fruit est alimenté à la fois par le xylème et le phloème. Ensuite, le fruit est alimenté uniquement par le phloème, Or, le calcium circule dans le xylème.

De plus, la pulvérisation est avantageusement effectuée le matin ou le soir, quand les stomates des folioles sont ouverts.

Les grains fortement chargés en calcium sont suffisamment fins pour pénétrer directement par les orifices des stomates, dans le tissu lacuneux de la feuille, avant d'être pris en charge par les faisceaux libéro-ligneux de la plante, et d'être délivrés par exemple au niveau des fruits (pommes, petits pois ...), ou des tubercules (pomme de terre, ...).

La plupart des autres composés de la composition ont un effet bénéfique sur la croissance de la plante, en particulier le manganèse, le bore et le zinc qui sont synergisants du calcium.

Bien entendu, l'invention ne se limite pas à la présente description mais s'étend à tout ce que l'homme du métier pourrait avec évidence déduire de son contenu.

## Revendications

1. Composition liquide pour le traitement des végétaux en application foliaire, caractérisée en ce qu'elle comporte des extraits d'algue marine et des grains fortement chargés en calcium dont la dimension moyenne est inférieure à 30 micromètres.

2. Composition selon la revendication 1, caractérisée en ce que la dimension moyenne des grains est comprise entre 5 et 25 micromètres.

3. Composition selon l'une des revendications 1 ou 2, caractérisée en ce que les grains sont des grains de Maërl fortement chargés en carbonate de calcium.

4. Composition selon l'une des revendications 1 à 3, caractérisée en ce que les extraits d'algue marine comportent de l'alginate.

5. Composition selon la revendication 4, caractérisée en ce que l'alginate est dissociée.

6. Composition selon l'une des revendications 1 à 5, caractérisée en ce que les grains sont mis en suspension dans ladite composition à l'aide d'un agent tensio-actif.

7. Composition selon l'une des revendications 1 à 6, caractérisée en ce qu'elle comporte en outre un fongicide ou un herbicide.

8. Procédé pour la fabrication d'une composition liquide selon l'une des revendications 1 à 7, caractérisé en ce qu'il comporte une étape d'extraction des constituants cellulaires des algues marines par traitement alcalin, suivie d'une étape de filtration et d'une étape de broyage, préalable à la mise en suspension dans la solution ainsi obtenue, de grains fortement chargés en calcium.

9. Procédé selon la revendication 8, caractérisé en ce que les grains à base de calcium sont obtenus par broyage.
